# EUROPÄISCHE PATENTANMELDUNG

(11) **EP 1 752 247 A1**
(43) Veröffentlichungstag der Anmeldung: **14.02.2007**
(21) Anmeldenummer: 05022426.0
(22) Anmeldetag: 14.10.2005
(51) Int. Cl.: B23K 9/02, B23K 26/26

(54) **Verfahren zum Stumpfschweissen eines auf Biegung beanspruchten Werkstückes**

(30) Priorität: 10.08.2005 DE 102005038099
(71) Anmelder: Hugo Kern und Liebers GmbH & Co. KG Platinen-und Federnfabrik, 78713 Schramberg (DE)
(72) Erfinder: Müller, Matthias, Dr., 78661 Dietingen (DE)
(74) Vertreter: Mussgnug, Bernd

(57) **Zusammenfassung**

Zum Stumpfschweißen eines auf Biegung beanspruchten Werkstückes, dessen Schweißnaht quer zur Biegungsachse verläuft, wird die Schweißnaht von ihren beiden äußeren Enden beginnend in Teilnähten zur neutralen Ebene der Biegung hingeführt. Im Bereich der neutralen Ebene überlappen sich die Teilnähte. Die Streckenenergie wird im überlappenden Bereich jeweils ausgerampt.

## Beschreibung

Die Erfindung betrifft ein Verfahren zum Stumpfschweißen eines auf Biegung beanspruchten Werkstückes gemäß dem Oberbegriff des Patentanspruchs 1.

Zum Stumpfschweißen metallischer Werkstücke mit relativ geringem Querschnitt der zu verschweißenden Flächen wird vorzugsweise das Laserschweißen eingesetzt. Die Verwendung eines gepulsten Lasers ergibt dabei eine vorteilhafte geringe Breite der Schweißnaht. Die Vorschubgeschwindigkeit des Laserstrahls bei dem Schweißvorgang ist dabei jedoch gering und das Abkühlen der Schweißschmelze zwischen den einzelnen Pulsen kann zu Inhomogenitäten führen. Die Schweißung im Dauerstrichbetrieb führt zu einer größeren Breite der Schweißnaht. Bei Verwendung eines Lasers mit hoher Fokussierung (z. B. Scheiben- oder Faserlaser) im cw-Betrieb oder im gepulsten Betrieb mit entsprechend langer Pulsdauer kann zwar eine geringe Breite der Schweißnaht erzielt werden, die Dauerschwingfestigkeit bei einer Biegebeanspruchung ist jedoch begrenzt.

Der Erfindung liegt daher die Aufgabe zugrunde, ein Verfahren zum Stumpfschweißen eines auf Biegung beanspruchten Werkstückes zu schaffen, welches eine geringe Breite der Schweißnaht mit einer verbesserten Dauerschwingfestigkeit vereinigt.

Diese Aufgabe wird erfindungsgemäß gelöst durch ein Verfahren mit den Merkmalen des Patentanspruchs 1.

Vorteilhafte Ausführungen der Erfindung sind in den Unteransprüchen angegeben.

Der Erfindung liegt die Erkenntnis zugrunde, dass bei der Erzeugung der Schweißnaht am Nahtende Randkerben entstehen können, die die Dauerfestigkeit des geschweißten Werkstückes beeinträchtigen, weil diese Randkerben sich am Außenrand des Werkstückes befinden, welcher bei einer wechselnden oder schwellenden Biegebeanspruchung den stärksten Druck- und insbesondere Zugkräften ausgesetzt ist. Es wurde festgestellt, dass beim Schweißen mit einem hochfokussierten DauerstrichLaser in dem in der Schweißnaht ausgebildeten Schmelzbad durch die hohe Laserintensität eine Dampfkapillare ausgebildet wird, die durch das geschmolzene Metall gezogen wird. Die geringe Breite des Schmelzbades im Bereich dieser Dampfkapillare führt dazu, dass das geschmolzene Metall mit hoher Strömungsgeschwindigkeit um die Kapillare herum strömt und mit einem großen Impuls hinter die sich vorwärts bewegende Dampfkapillare gedrückt wird. Dies führt zu einer Materialanhäufung hinter dem entlang der Schweißnaht durch das Werkstück geführten Laserstrahl. Wird zur Herstellung der Schweißnaht in herkömmlicher Weise der Laserstrahl von einer Seite des Werkstückes zur anderen hindurch gezogen, so führt dies zu einer Materialanhäufung am Nahtanfang, an welchem der Laserstrahl in das Werkstück eintritt, während am Nahtende eine Randkerbe entsteht, da dort kein geschmolzenes Metall von der Vorderseite des Laserstrahls zum Auffüllen der Randkerbe nachgeführt werden kann.

Die Erfindung nützt diese Erkenntnis in der Weise aus, dass die Schweißnaht in zwei Schritten erzeugt wird und von den beiden äußeren Seiten des Werkstückes nach innen geführt wird, wo sich die beiden in den zwei Schritten hergestellten Teilnähte im Bereich der neutralen Ebene bzw. neutralen Faser der Biegebeanspruchung des Werkstückes vereinigen und überlappen. Dadurch wird sichergestellt, dass an beiden äußeren Enden der Schweißnaht, d. h. in den bei der Biegung am stärksten belasteten Randbereichen des Werkstückes eine vollständige Auffüllung der Schweißnaht durch das geschmolzene Metall gewährleistet ist und dadurch an keinem der Nahtenden eine Randkerbe entstehen kann. Eine durch den beschriebenen Effekt vor dem die Schweißnaht erzeugenden Laserstrahl eventuell entstehende Materialreduzierung des geschmolzenen Metalls kann im ungünstigsten Falle nur zu einer Schwächung im Bereich der neutralen Ebene bzw. neutralen Faser führen, die bei der Biegebeanspruchung am wenigsten belastet wird, sodass hierdurch die Dauerfestigkeit nicht beeinträchtigt wird.

Mit dem erfindungsgemäßen Verfahren kann somit eine Schweißung mit einem hochfokussierten cw-Laser durchgeführt werden, sodass sich eine hohe Vorschubgeschwindigkeit des Laserstrahls beim Schweißvorgang und damit eine kurze Prozesszeit realisieren lässt. Die Schweißnaht weist eine geringe Breite auf. Das Werkstück weist auch im Bereich der Schweißnaht eine hohe Dauerfestigkeit bei Biegebeanspruchung auf.

Zur Herstellung der Schweißnaht wird vorzugsweise ein Laser benutzt. Der Laser kann im Dauerstrichbetrieb als cw-Laser ausgebildet sein oder im Quasi-Dauerstrich gepulst betrieben werden, wobei die Pulslänge groß gegenüber der Vorschubgeschwindigkeit des Lasers ist. Eine gute Fokussierung bietet insbesondere ein Scheibenlaser, Faserlaser oder ein Pulslaser mit entsprechend langen Laserpulsen.

Um die von den beiden Außenseiten beginnend nach innen geführten Teilnähte im Bereich der neutralen Ebene zuverlässig zu vereinigen, werden diese Teilnähte vorzugsweise bis über die neutrale Ebene, die in der Regel in der Mitte des Werkstückes verläuft, hinausgeführt, sodass sie sich im Innern des Werkstückes überlappen.

Dabei ist es von Vorteil, wenn die über den Laserstrahl eingetragene Streckenenergie, d. h. die pro Weglängeneinheit der Schweißnaht mittels des Lasers eingebrachte Energie, in dem überlappenden Bereich ausgerampt wird. Dieses sogenannte "Ausrampen" bedeutet dabei, dass die Streckenenergie von dem maximalen Wert während des Hauptweges der Schweißnaht in dem überlappenden Bereich kontinuierlich auf einen minimalen Wert reduziert wird, der nicht mehr zu einem Schmelzen des Metalls ausreicht.

Dieses "Ausrampen" kann in unterschiedlicher Weise realisiert werden. Es ist möglich, die Laserleistung zu reduzieren, sodass sich die Streckenenergie bei konstanter Vorschubgeschwindigkeit des Laserstrahls verringert. Ebenso kann die Streckenenergie dadurch verringert werden, dass bei konstanter Laserleistung die Vorschubgeschwindigkeit erhöht wird. Es sind auch Kombinationen dieser beiden Alternativen möglich. So kann die Laserleistung verringert und gleichzeitig die Vorschubgeschwindigkeit erhöht werden. Es ist auch möglich, die Vorschubgeschwindigkeit zu verringern, wenn gleichzeitig die Laserleistung entsprechend stark reduziert wird.

Für die Durchführung des erfindungsgemäßen Verfahrens ist es wesentlich, dass die Streckenenergie schnell und positionsgenau gesteuert werden kann. Dies ist insbesondere für das Ausrampen im Bereich der Überlappung der beiden von außen geführten Teilnähte wichtig. Eine schnelle und positionsgenaue Steuerung setzt eine entsprechend schnelle und genaue Steuerung der Laserleistung und/oder der Vorschubgeschwindigkeit des Laserstrahls voraus.

Dies kann dadurch realisiert werden, dass z. B. ein Scheibenlaser oder ein Pulslaser mit einer Scanneroptik kombiniert wird. Ein diodengepumpter Scheibenlaser weist eine kurze Reaktionszeit auf und kann direkt durch den Scanner angesteuert werden. Die Reaktionszeit des Lasers und die Ablenkgeschwindigkeit der Scanneroptik sind dabei etwa zwei Größenordnungen schneller als die für den Schweißvorgang erforderlich Vorschubgeschwindigkeit, sodass eine präzise und lagegenaue Steuerung möglich ist. Bei kleinen Werkstücken ist der von der Scanneroptik überfahrbare Weg größer als die Länge der zu erzeugenden Schweißnaht. Das Werkstück kann daher feststehend positioniert werden und durch den Laserstrahl überstrichen werden. Die Scanneroptik ist vorzugsweise mit einer Bildverarbeitung gekoppelt, die das Werkstück erkennt und das Startsignal für den Schweißprozess vorgibt.

Anstelle einer Scanneroptik kann auch eine Verfahreinheit mit NC-Steuerung verwendet werden, um die Relativbewegung zwischen dem Laserstrahl und dem Werkstück zu erzeugen.

Das Verfahren eignet sich insbesondere auch dazu, mehrere, vorzugsweise gleichartige, Werkstücke nacheinander zu schweißen. Hierzu können diese Werkstücke parallel nebeneinander angeordnet werden, wobei ihre Schweißnähte fluchtend ausgerichtet sind und durch den Laserstrahl aufeinanderfolgend überstrichen werden. Die Werkstücke können gleichartige Einzelteile sein, z. B. Nadeln für Textilmaschinen, bei welchen jeweils ein Nadelkopf an einen Nadelschaft angeschweißt wird. Ebenso können mehrere beabstandete Teile eines einzigen Werkstückes geschweißt werden, z. B. parallel verlaufende Federstege eines Federelementes.

Im Folgenden wird die Erfindung anhand der beiliegenden Zeichnung näher erläutert. Es zeigen
- Fig.1: schematisch ein stumpfgeschweißtes auf Biegung beanspruchtes Werkstück,
- Fig. 2: schematisch das Schweißverfahren nach dem Stand der Technik,
- Fig. 3: in einer Fig. 2 entsprechenden schematischen Darstellung das Schweißverfahren gemäß der Erfindung,
- Fig. 4: in einem Diagramm eine Ausführung der Erfindung und
- Fig. 5: in einem Diagramm eine weitere Ausführung der Erfindung.

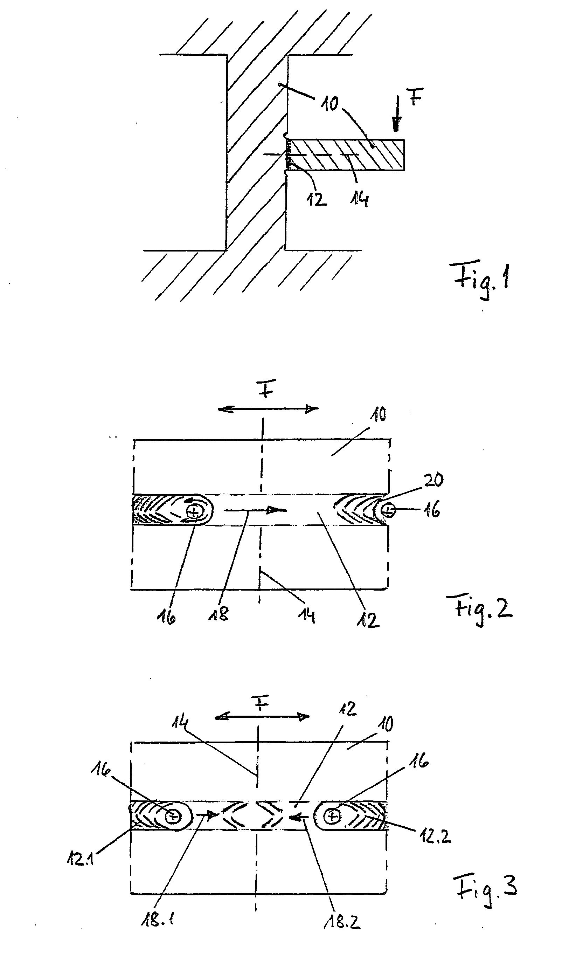

Fig. 1 zeigt schematisch die Grundanordnung für die Anwendung des erfindungsgemäßen Verfahrens. Ein Werkstück 10 weist einen langgestreckten Abschnitt auf, der stumpf an einem feststehenden Abschnitt angeschweißt ist. Das Werkstück 10 wird gemäß dem Pfeil F quer zu seiner Längserstreckung auf Biegung beansprucht. Die Beanspruchung kann wechselnd sein, d. h. in positiver und negativer Richtung um einen Nullpunkt schwingend, oder schwellend, d. h. zwischen einer maximalen Auslenkung und einem unbelasteten Nullpunkt variieren. Die Schweißnaht 12, mit welcher der langgestreckte Teil und der feststehende Teil des Werkstückes 10 miteinander verschweißt werden, verläuft quer zur Biegeachse z. B. unter einem Winkel von 30° bis 90° zu der neutralen Ebene 14 bzw. neutralen Faser. Die Biegung des Werkstückes 10 bewirkt jeweils eine Zugbeanspruchung an einem äußeren Ende der Schweißnaht 12 und eine Druckbeanspruchung an dem entgegengesetzten Ende der Schweißnaht 12, wobei im Bereich der neutralen Ebene 14 die Beanspruchung minimal ist.

Fig. 2 zeigt schematisch die Herstellung der Schweißnaht 12 mittels eines cw-Lasers nach dem Stand der Technik. Der mit hoher Intensität hochfokussierte Laserstrahl 16 wird entlang der Schweißnaht 12 zwischen den stumpf einander berührenden Schweißflächen des Werkstückes 10 hindurchgeführt. In Fig. 2 erfolgt der Vorschub des Laserstrahls 16 von links nach rechts in Richtung des Pfeiles 18. Der Laserstrahl 16 erzeugt aufgrund seiner hohen Intensität in dem Metall des Werkstückes 10 im Bereich seines Durchtrittes eine Dampfkapillare, die von einem Schmelzbad aus geschmolzenem Metall umgeben ist. Wird der Laserstrahl 16 in Vorschubrichtung 18 bewegt, so verdrängt die Dampfkapillare des sich vorwärts bewegenden Laserstrahls 16 das geschmolzene Metall. Dieses strömt mit hoher Geschwindigkeit und hohem Impuls seitlich an dem Laserstrahl 16 vorbei und wird hinter diesen verdrängt, wie dies in Fig. 2 durch Pfeile angedeutet ist. Das geschmolzene Material sammelt sich somit hinter dem vorwärts wandernden Laserstrahl 16 an. In Fig. 2 ist angedeutet, wie sich hierdurch auf der Eintrittsseite des Laserstrahls 16, d. h. in Fig. 2 am linken Ende der Schweißnaht 12, eine verdichtete Ansammlung von geschmolzenem Metall ergibt. Tritt der Laserstrahl 16 nach Durchlaufen der Schweißnaht 12 an deren in Fig. 2 rechtem Ende aus, so ergibt sich am Austrittsende eine Randkerbe 20, da nun kein geschmolzenes Material von der Vorderseite des Laserstrahls 16 mehr nachgeliefert werden kann, um die Schweißnaht hinter dem Laserstrahl 16 aufzufüllen. Eine Biegebeanspruchung des Werkstückes 10 in der zur Schweißnaht 12 senkrechten Längsachse führt zu Druck- und insbesondere Zugbeanspruchungen der Außenseiten des Werkstückes 10, sodass die Randkerbe 20 die Dauerfestigkeit beeinträchtigen kann.

Fig. 3 zeigt in einer Fig. 2 entsprechenden schematischen Darstellung das erfindungsgemäße Verfahren.

Hierbei wird zunächst der Laserstrahl 16 von der einen Seite des Werkstückes 10 entlang der herzustellenden Schweißnaht 12 in der Vorschubrichtung 18.1 in das Werkstück 10 hineingeführt. Dabei wird in der oben beschriebenen Weise das geschmolzene Material hinter dem Laserstrahl 16 angehäuft und füllt das Eintrittsende der Schweißnaht 12 vollständig aus. Sobald der Laserstrahl 16 in der Vorschubrichtung 18.1 über die neutrale Ebene 14 hinausgeführt ist, wird der Laserstrahl 16 ausgerampt. Anschließend wird der Laserstrahl 16 von der entgegengesetzten Seite des Werkstückes 10 entlang der Schweißnaht 12 in der entgegengesetzten Vorschubrichtung 18.2 eingeführt. Hierbei führt das hinter den vorwärts wandernden Laserstrahl 16 verdrängte geschmolzene Material ebenfalls zu einer vollständigen Ausfüllung der Schweißnaht 12 an deren rechtem Eintrittsende. Sobald der Laserstrahl 16 in Vorschubrichtung 18.2 bis über die neutrale Ebene 14 hinausgeführt ist, wird der Laserstrahl 16 wieder ausgerampt. Die gemäß 18.1 von links und gemäß 18.2 von rechts eingeführten Teilnähte 12.1 und 12.2 überlappen sich im mittleren Bereich der neutralen Ebene 14. Da beide Eintrittsenden der Teilnähte 12.1 und 12.2 vollständig von dem geschmolzenen Material ausgefüllt sind, entsteht auf keiner der beiden Seiten des Werkstückes 10 eine Randkerbe, die die Dauerfestigkeit beeinträchtigen könnte. Eine Materialschwächung kann sich nur im mittleren Bereich bilden, in welchem die von den beiden Seiten eingeführten Teilnähte sich überlappen. Eine solche eventuelle Materialschwächung liegt aber im Bereich der neutralen Ebene 14, sodass dieser Bereich des Werkstückes 10 keiner wesentlichen Zug- und Druckbeanspruchung unterworfen ist.

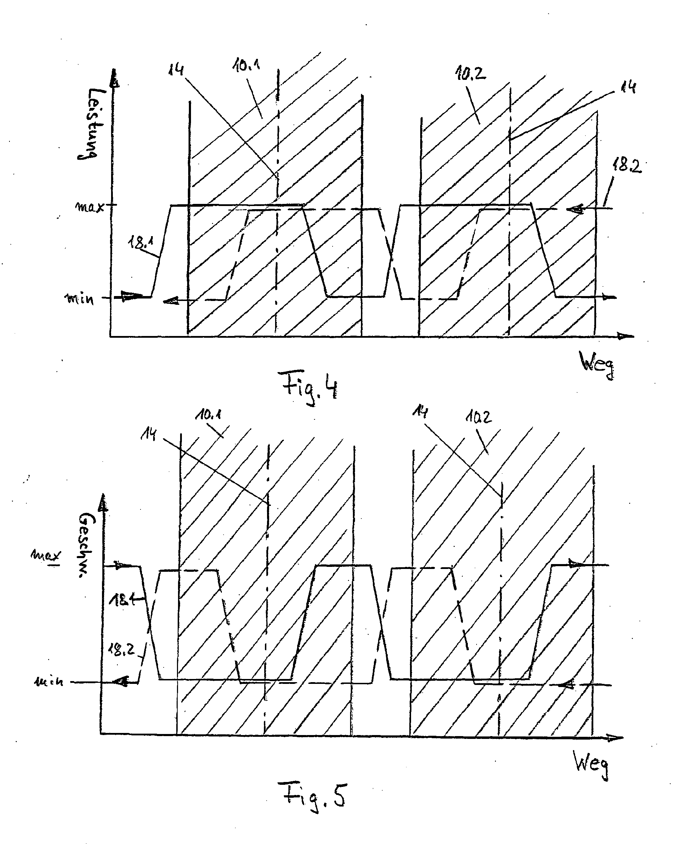

Fig. 4 erläutert in einer ersten Ausführung das Verfahren. In dem Diagramm der Fig. 4 ist als Abszisse der Vorschubweg des Laserstrahls 16 und als Ordinate die Laserleistung aufgetragen. Weiter zeigt das Diagramm der Fig. 4, wie mehrere parallel nebeneinander angeordnete Werkstücke 10.1, 10.2,... nacheinander verschweißt werden können.

Der Laser wird im Quasi-Dauerstrich betrieben, d. h. mit einer Pulslänge, die etwa der Vorschubzeit für die Schweißung eines Werkstückes entspricht.

Zunächst wird der Laserstrahl 16 von links kommend, wie durch die ausgezogene Linie 18.1 gezeigt ist, mit heruntergesteuerter Leistung an das Werkstück 10.1 herangeführt. Sobald die Randkante des Werkstückes 10.1 erkannt ist, wird die Laserleistung auf den Maximalwert hochgefahren. Mit dieser maximalen Leistung wird der Laserstrahl zur Erzeugung der Teilnaht 12.1 in das Werkstück 10.1 hineingeführt, bis er die neutrale Ebene 14 überschritten hat. Dann wird der Laserstrahl 16 ausgerampt, indem bei gleichbleibender Vorschubgeschwindigkeit die Leistung des Laserstrahls wieder auf den Minimalwert abgesenkt wird. Mit dieser minimalen Leistung läuft der Laserstrahl weiter über den Rest des Werkstückes 10 und über dieses hinaus, bis die linke Randkante des folgenden Werkstückes 10.2 erkannt wird. Dann wird die Leistung des Lasers wieder auf den maximalen Wert hochgefahren, um die Teilnaht 12.1 in diesem folgenden Werkstück 10.2 in gleicher Weise herzustellen. Wenn für alle aufeinanderfolgenden Werkstücke 10.1, 10.2,... die Teilnaht 12.1 in der linken Hälfte in der beschriebenen Weise hergestellt ist, läuft der Laserstrahl 16 in der entgegengesetzten Richtung von rechts nach links gemäß der gestrichelt gezeichneten Linie 18.2 zurück. Hierbei wird die Laserleistung jeweils von dem Minimalwert auf den Maximalwert hochgefahren, wenn die rechte Randkante des jeweiligen Werkstückes 10.1 erkannt wird. Die Teilnaht 12.2 wird dann mit maximaler Leistung in das Werkstück geführt, bis die neutrale Ebene 14 überschritten ist. Dann wird wieder die Leistung des Lasers von dem Maximalwert auf den Minimalwert ausgerampt, bis die rechte Randkante des nächsten Werkstückes erkannt wird.

Bei dieser Ausführung des Verfahrens werden die Teilnähte jeweils von beiden Außenseiten mit hoher Laserleistung bis über die neutrale Ebene hinausgeführt und durch Reduzierung der Laserleistung ausgerampt. Im mittleren Bereich der neutralen Ebene 14 überlappen sich die von den beiden Seiten eingeführten Teilnähte. Die Vorschubgeschwindigkeit des Laserstrahls 16 ist dabei durchgehend konstant.

Fig. 5 zeigt eine weitere Ausführung des Verfahrens. Als Abszisse des Diagramms ist wieder der Vorschubweg des Laserstahls 16 aufgetragen als Ordinate die Vorschubgeschwindingkeit.

In dieser Ausführung wird der Laser durchgehend mit konstanter Leistung betrieben. Es wird jedoch die Vorschubgeschwindigkeit gesteuert.

Zunächst wird der Laserstrahl gemäß der ausgezogenen Linie 18.1 mit hoher Geschwindigkeit von links an das erste Werkstück 10.1 herangeführt. Sobald die Randkante des Werkstückes 10.1 erkannt ist, wird die Vorschubgeschwindigkeit des Laserstrahls 16 auf eine minimale Geschwindigkeit abgesenkt. Mit dieser minimalen Geschwindigkeit und einem entsprechend hohen Energieeintrag pro Strecke wird der Laserstrahl 16 entlang der Teilnaht 12.1 bis über die neutrale Ebene 14 geführt. Dann wird die Streckenenergie ausgerampt, indem die Vorschubgeschwindigkeit des Laserstrahls 16 wieder auf den Maximalwert hochgefahren wird. Mit dieser hohen Geschwindigkeit wird der Laserstrahl 16 über die restliche Länge der Schweißnaht 12 und über das Werkstück 10.1 hinausgefahren, bis die linke Randkante des folgenden Werkstückes 10.2 erkannt wird. Dann wird die Vorschubgeschwindigkeit wieder auf den minimalen Wert herabgesetzt und der Zyklus wiederholt sich bei den folgenden Werkstücken.

Nachdem alle Werkstücke 10.1, 10.2,... in dieser Weise im linken Bereich der Teilnaht 12.1 verschweißt sind, wird die Bewegungsrichtung des Laserstrahls 16 umgekehrt und dieser läuft von rechts nach links gemäß der gestrichelten Linie 18.2 über die Werkstücke ..., 10.2., 10.1. Dabei läuft der Laserstrahl 16 jeweils mit der hohen Geschwindigkeit bis die jeweils rechte Randkante des Werkstückes erkannt wird, dann wird die Vorschubgeschwindigkeit auf den Minimalwert abgesenkt und die Teilnaht 12.2 vom rechten Rand bis über die neutrale Ebene 14 mit der langsamen Vorschubgeschwindigkeit verschweißt. Nach Überschreiten der neutralen Ebene 14 wird die Streckenenergie wieder durch Hochfahren der Vorschubgeschwindigkeit ausgerampt.

Es ist ohne Weiteres ersichtlich, dass die in den Figuren 4 und 5 dargestellten Verfahren auch miteinander kombiniert werden können.

Dies kann z. B. in der Weise geschehen, dass zum Ausrampen der Streckenenergie sowohl die Laserleistung reduziert wird als auch die Vorschubgeschwindigkeit des Laserstrahls erhöht wird.

Es ist auch eine Ausführung möglich, bei welcher zum Ausrampen der Streckenenergie die Vorschubgeschwindigkeit des Laserstrahls 16 nach Überschreiten der neutralen Ebene 14 verringert wird. Um trotz der Verringerung der Vorschubgeschwindigkeit eine Reduzierung der Streckenenergie zu erhalten, muss gleichzeitig die Laserleistung entsprechend stark heruntergefahren werden. Bei dieser Ausführung bewirkt die Verringerung der Vorschubgeschwindigkeit, dass der Effekt der Verdrängung des geschmolzenen Materials und der Strömung des geschmolzenen Materials hinter den vorwärts wandernden Laserstrahl am Ende des Schweißweges geringer wird. Eine Materialreduzierung und Schwächung im mittleren Überlappungsbereich der Teilnähte wird dadurch minimiert.

Selbstverständlich können bei dem Verfahren gemäß den Figuren 4 und 5 die Teilnähte 12.1 und 12.2 auch jeweils vollständig von beiden Enden, d. h. in den Richtungen 18.1 und 18.2 für jedes einzelne Werkstück 10.1 bzw. 10.2,... erzeugt werden, bevor der Schweißvorgang bei dem nächsten Werkstück fortgesetzt wird. Ebenso können zunächst die Teilnähte 12.1 für sämtliche Werkstücke 10.1, 10.2, ... erzeugt werden und dann die Teilnähte 12.2, wobei wiederum mit dem Werkstück 10.1 begonnen wird.

Das erfindungsgemäße Verfahren eignet sich insbesondere zum Schweißen von kleinsten Werkstücken. Ein Beispiel hierfür sind Nadeln, wie sie in Textilmaschinen, insbesondere Strickmaschinen, verwendet werden. Bei solchen Nadeln wird ein Nadelkopf stumpf an einen Schaft angeschweißt. Die Abmessungen der zu verschweißenden Flächen liegen dabei im Bereich von 1 mm und kleiner. Ein weiteres Beispiel für die Anwendung des Verfahrens ist das Zusammenschweißen eines gestanzten Federbleches zu einem Federrohr entlang einer achsparallel verlaufenden Mantellinie. Hierbei werden in Umfangsrichtung des Federrohres verlaufende Federstege stumpf zusammengeschweißt. Diese Federstege weisen z. B. eine Breite von 1 mm bis 2 mm und eine Materialstärke von 0,5 mm und weniger auf.

Um solche kleinsten Werkstücke in der erfindungsgemäßen Weise zu schweißen, wird vorzugsweise ein diodengepumpter Scheibenlaser verwendet, der eine sehr scharfe Fokussierung ermöglicht. Der Laserstrahl wird über eine Scanneroptik entlang der Schweißnaht geführt, wobei die Scanneroptik einen Auslenkweg von 50 mm und mehr aufweist, sodass eine größere Anzahl von Werkstücken oder Federstegen aufeinanderfolgend geschweißt werden können, ohne dass die Werkstücke bewegt werden müssen. Die feste Aufspannung der Werkstücke ermöglicht eine hohe Präzision in der Führung des Laserstrahls bezüglich der Werkstücke. Der Galvano-Scanner weist eine hohe Dynamik auf und ermöglicht große Beschleunigungen und Verzögerungen in Verbindung mit einer sehr exakten Positionssteuerung.

Wird die Laserleistung gesteuert, wie dies vorstehend anhand der Fig. 4 erläutert ist, so kann der Scanner den Laser direkt steuern, ohne dass hierzu eine Speicher-programmierbare Steuerung notwendig ist. Die Reaktionszeiten eines diodengepumpten Scheibenlasers liegen bei etwa 250 µs, sodass eine sehr präzise ortsabhängige Steuerung der Laserleistung möglich ist.

Wird die Vorschubgeschwindigkeit des Laserstrahls gesteuert, wie dies vorstehend anhand der Fig. 5 erläutert ist, so lässt sich aufgrund der Dynamik des Scanners die Vorschubgeschwindigkeit des Laserstrahls mit hoher Ortsgenauigkeit erhöhen und reduzieren.

Bei einer Steuerung der Vorschubgeschwindigkeit des Laserstrahls werden bspw. ca. 70% der Schweißnaht von beiden Seiten beginnend mit einer minimalen Geschwindigkeit von etwa 6 m/min und die restliche Nahtlänge von etwa 30% mit der maximalen Vorschubgeschwindigkeit von etwa 20 m/min überstrichen. Ein Federrohr mit 10 Federstegen von jeweils einer Breite von ca. 2 mm kann auf diese Weise innerhalb einer Prozesszeit von weniger als etwa 0,4 s geschweißt werden. Die Steuerung durch die Scanneroptik ergibt dabei eine präzise Reproduzierbarkeit der Schweißnähte.

## Patentansprüche

1. Verfahren zum Stumpfschweißen eines auf Biegung beanspruchten Werkstückes, wobei die Schweißnaht quer zur Biegungsachse verläuft,
**dadurch gekennzeichnet, dass**
die Schweißnaht (12) von ihren beiden äußeren Enden beginnend in Teilnähten (12.1, 12.2) zur neutralen Ebene (14) der Biegung hingeführt wird.

2. Verfahren nach Anspruch 1,
**dadurch gekennzeichnet, dass**
sich die von den beiden äußeren Enden nach innen geführte Teilnähte (12.1, 12.2)) im mittleren Bereich überlappt.

3. Verfahren nach Anspruch 1 oder 2,
**dadurch gekennzeichnet , dass**
die Schweißnaht (12) mittels eines Lasers hergestellt wird.

4. Verfahren nach Anspruch 3,
**dadurch gekennzeichnet, dass**
der Laser im Dauerstrich betrieben wird.

5. Verfahren nach Anspruch 3,
**dadurch gekennzeichnet, dass**
der Laser gepulst betrieben wird, wobei die Pulslänge wenigstens der Dauer der Herstellung der Schweißnaht (12) entspricht.

6. Verfahren nach einem der Ansprüche 1 bis 5,
**dadurch gekennzeichnet, dass**
die Streckenenergie (Energieeintrag pro Weglänge der Schweißnaht) am Ende der Teilnähte (12.1, 12.2) ausgerampt wird.

7. Verfahren nach Anspruch 6,
**dadurch gekennzeichnet, dass**
das Ausrampen nach Überschreiten der neutralen Ebene (14) erfolgt.

8. Verfahren nach Anspruch 6 oder 7,
**dadurch gekennzeichnet, dass**
das Ausrampen durch Reduzierung der Laserleistung bei konstanter Vorschubgeschwindigkeit des Laserstrahls erfolgt.

9. Verfahren nach Anspruch 6 oder 7,
**dadurch gekennzeichnet, dass**
das Ausrampen durch Erhöhung der Vorschubgeschwindigkeit des Laserstrahls bei konstanter Laserleistung erfolgt.

10. Verfahren nach Anspruch 6 oder 7,
**dadurch gekennzeichnet, dass**
das Ausrampen durch Reduzierung der Laserleistung und Erhöhung der Vorschubgeschwindigkeit des Laserstrahls erfolgt.

11. Verfahren nach Anspruch 6 oder 7,
**dadurch gekennzeichnet, dass**
das Ausrampen durch Reduzierung der Vorschubgeschwindigkeit des Laserstrahls und Reduzierung der Laserleistung erfolgt.

12. Verfahren nach einem der vorherigen Ansprüche,
**dadurch gekennzeichnet, dass**
der Laserstrahl durch eine Scanneroptik gegenüber dem Werkstück bewegt wird.

13. Verfahren nach Anspruch 12,
**dadurch gekennzeichnet, dass**
die Scanneroptik die Vorschubgeschwindigkeit des Laserstrahls und/oder die Laserleistung steuert.

14. Vorrichtung nach einem der Ansprüche 1 bis 11,
**dadurch gekennzeichnet, dass**
die Vorschubbewegung des Laserstrahls durch eine NC-Steuerung gesteuert wird.
